# EUROPEAN PATENT APPLICATION

(11) **EP 3 001 977 A1**
(43) Date of publication of application: **06.04.2016**
(21) Application number: 14306546.4
(22) Date of filing: 01.10.2014
(51) Int. Cl.: A61F 2/16, B29D 11/00, G02B 3/08, G02C 7/02

(54) **An optical lens having a discontinuous surface**

(71) Applicant: ESSILOR INTERNATIONAL (COMPAGNIE GENERALE D'OPTIQUE), 94220 Charenton-le-Pont (FR)
(72) Inventor: Colas, Pauline, 94220 CHARENTON-LE-PONT (FR); Roussel, Olivier, 94220 CHARENTON-LE-PONT (FR)
(74) Representative: Huisman, Aurélien

(57) **Abstract**

An optical lens having at least one of its optical surfaces comprising:
- a main continuous optically functional section limited by an initial contour (CO) with an inscribed circle (Cins) having a radius greater than or equal to 10 mm,
- n successive optically functional sections with n greater than or equal to 2,
wherein
- the main continuous optically functional section is joined to the first optimally functional section by a step,
- two successive optically functional sections are joined by a step,
- each optimally functional section extends radially from the center of the inscribed circle and is limited by an interior contour Cint,i and an exterior contour Cext,i with the interior contour Cint,i fully comprised in the exterior contour Cext,i ; and the smallest distance between a point of the interior contour and a point of the exterior contour being greater than or equal to 0.5 mm, and
- the optically functional sections are arranged so that for any i comprised between 1 and n the exterior contour of the ith optimally functional section Cext,i is fully comprised in the interior contour of the (i+1)th optically functional section Cint,i+1, and the half-planes Pj comprising the line normal to the plane defined by the inscribed circle passing by the center of the inscribed circle, the half-planes Pj being bounded by said line, the distance between an intersection point between the half-plane Pj and the exterior contour of the ith optimally functional section Cext,i and an intersection point between the half-plane Pj and the interior contour of the (i+1)th optimally functional section Cint,i+1 is smaller than or equal to I mm.

## Description

The invention relates to an optical lens having at least one of its optical surfaces comprising a discontinuous structure comprising a main continuous optically functional section limited by an initial contour and a plurality of successive optically functional sections. The invention further relates to a method of determining an optical lens according to the invention.

The discussion of the background of the invention herein is included to explain the context of the invention. This is not to be taken as an admission that any of the material referred to was published, known or part of the common general knowledge at the priority date of any of the claims.

There is an increasing interest in ophthalmic lens having discontinuous surfaces, such as Fresnel zone, for certain ophthalmic applications in lieu of more conventional refractive lenses. Among the reasons for the increased interest in Fresnel lenses for ophthalmic applications is to increase lens optical power and/or reduce lens thickness and therefore they are also referred to as "thin lenses with high power". The issues of such ophthalmic lenses may be a decrease in the optical and aesthetic performances of the ophthalmic lenses.

For example, the wearer may observe parasite images when wearing such ophthalmic lens. Furthermore, a person facing the wearer may observe the discontinuity of the surface of the lenses.

Therefore, there is a need for a method of optimizing the discontinuous structure of an ophthalmic lens so as to reduce such decrease in the optical and aesthetic performances.

An aim of the present invention is to propose an optical lens having at least one of its optical surfaces comprising a discontinuous structure that would limit the impact on optical and aesthetic performances.

To this end, the present invention relates to an optical lens having at least one of its optical surfaces comprising:
- a main continuous optically functional section limited by an initial contour C0 with an inscribed circle having a radius greater than or equal to 10 mm, a projection plane being defined as the plan containing the said inscribed circle Cins, a projection axis being defined as the direction normal to said projection plane,
- n successive optically functional sections with n greater than or equal to 2,
wherein
- the main continuous optically functional section is joined to the first optically functional section by a step,
- two successive optically functional sections are joined by a step,
- each optically functional section extends radially from the center of the inscribed circle and is limited by an interior contour Cint,i and an exterior contour Cext,i with the projection of said interior contour Cint,i according to the projection direction onto the projection plane fully comprised in projection of said the exterior contour Cext,i according to the projection direction onto the projection plane; and the smallest distance between a point of the interior contour and a point of the exterior contour being greater than or equal to 0.5 mm, and
- the optically functional sections are arranged so that for any i comprised between 1 and n the exterior contour of the ith optically functional section Cext,i is fully comprised in the interior contour of the (i+1)th optically functional section Cint,i+1, and the half-planes Pj comprising the line normal to the plane defined by the inscribed circle passing by the center of the inscribed circle, the half-planes Pj being bounded by said line, the distance between an intersection point between the half-plane Pj and the exterior contour of the ith optically functional section Cext,i and an intersection point between the half-plane Pj and the interior contour of the (i+1)th optically functional section Cint,i+1 is smaller than or equal to 1 mm.

Advantageously, the inventors have observed that combining a minimum size for the main continuous optically functional section, a maximum height for the steps joining each optically functional sections and a minimum width for each of the optically functional sections reduces the impact of the discontinuous structure on optical and aesthetic performances of the ophthalmic lens while maintaining the advantage of discontinuous structured lens, i.e. reduced thickness.

According to further embodiments which can be considered alone or in combination:
- the distance between an intersection point between the half-plane Pj and the exterior contour of the ith optically functional section Cext,i and an intersection point between the half-plane Pj and the interior contour of the (i+1)th optically functional section Cint,i+1 is greater than or equal to 0.05 mm; and/or
- the distance between an intersection point between the half-plane Pj and the exterior contour of the ith optically functional section Cext,i and an intersection point between the half-plane Pj and the interior contour of the (i+1)th optically functional section Cint,i+1 is smaller than or equal to 0.7 mm; and/or

- each optically functional sections extends radially from the center of the inscribed circle so that the smallest distance between a point of the interior contour and a point of the exterior contour being greater than or equal to 1 mm; and/or
- the distance between an intersection point between the half-plane Pj and the exterior contour of the ith optically functional section Cext,i and an intersection point between the half-plane Pj and the interior contour of the (i+ 1)th optically functional section Cint,i+1 varies from two optically functional section to the others; and/or
- the distance between an intersection point between the half-plane Pj and the exterior contour of the ith optically functional section Cext,i and an intersection point between the half-plane Pj and the interior contour of the (i+1)th optically functional section Cint,i+1 increases from the optically functional section joined to the main continuous optically functional section to the optically functional section the closest to the edge of the optical lens; and/or
- the smallest distance between a point of the interior contour and a point of the exterior contour varies from one optically functional section to the other; and/or
- the smallest distance between a point of the interior contour and a point of the exterior contour decreases from the optically functional section joined to the main continuous optically functional section to the optically functional section the closest to the edge of the optical lens; and/or
- the main continuous optically functions section comprises the fitting point of the optical lens; and/or
- the optical lens is configured so that when worn by a wearer under standard wearing conditions, the primary gaze direction passes through the main continuous optically functions section; and/or
- for each optically functional sections the interior and exterior contours of the optically functional sections have a center of symmetry; and/or
- for each optically functional sections the interior and exterior contours have substantially the barycenter; and/or
- for each optically functional sections the interior and exterior contours have substantially the same center; and/or
- the front optical surface comprises the at least two discontinuous optically functional sections and the back surface is to be machined according at least to the optical requirements of the wearer; and/or
- the optical lens is an ophthalmic lens.

The invention further relates to a method, for example implemented by computer means, for determining an optical lens according to the invention to be mounted in a spectacle frame, the method comprising:
- a spectacle frame data providing step, during which spectacle frame data comprising the shape of the spectacle frame are provided,
- a wearer parameters providing step, during which wearer parameters relating to the optical requirements of the wearer are provided,
- a optical lens determining step, during which the optical lens is determined according to the wearer parameters and the discontinuous optically functional sections are determined so that once edged to be mounted in the spectacle frame, the optical lens does not comprise any discontinuous optically functional sections in the nasal part of the optical lens.

According to a further aspect, the invention relates to a computer program product comprising one or more stored sequences of instructions that are accessible to a processor and which, when executed by the processor, causes the processor to carry out the steps of the method according to the invention.

The invention further relates to a computer readable medium carrying one or more sequences of instructions of the computer program product according to the invention.

Furthermore, the invention relates to a program which makes a computer execute the method of the invention.

The invention also relates to a computer-readable storage medium having a program recorded thereon; where the program makes the computer execute the method of the invention.

The invention further relates to a device comprising a processor adapted to store one or more sequence of instructions and to carry out at least one of the steps of the method according to the invention.

Unless specifically stated otherwise, as apparent from the following discussions, it is appreciated that throughout the specification discussions utilizing terms such as "computing", "calculating", "generating", or the like, refer to the action and/or processes of a computer or computing system, or similar electronic computing device, that manipulate and/or transform data represented as physical, such as electronic, quantities within the computing system's registers and/or memories into other data similarly represented as physical quantities within the computing system's memories, registers or other such information storage, transmission or display devices.

Embodiments of the present invention may include apparatuses for performing the operations herein. This apparatus may be specially constructed for the desired purposes, or it may comprise a general purpose computer or a Field Programmable Gate Array ("FPGA") or Digital Signal Processor ("DSP") selectively activated or reconfigured by a computer program stored in the computer. Such a computer program may be stored in a computer readable storage medium, such as, but is not limited to, any type of disk including floppy disks, optical disks, CD-ROMs, magnetic-optical disks, read-only memories (ROMs), random access memories (RAMs) electrically programmable read-only memories (EPROMs), electrically erasable and programmable read only memories (EEPROMs), magnetic or optical cards, or any other type of media suitable for storing electronic instructions, and capable of being coupled to a computer system bus.

The processes and displays presented herein are not inherently related to any particular computer or other apparatus. Various general purpose systems may be used with programs in accordance with the teachings herein, or it may prove convenient to construct a more specialized apparatus to perform the desired method. The desired structure for a variety of these systems will appear from the description below. In addition, embodiments of the present invention are not described with reference to any particular programming language. It will be appreciated that a variety of programming languages may be used to implement the teachings of the inventions as described herein.

Other features and advantages of the present invention will become apparent from the following description of non-limitative embodiments, with reference to the attached drawing in which:
- figure 1 is a schematic representation of a side view of an ophthalmic lens according to the invention,
- figure 2 is a schematic representation of a front view of an ophthalmic lens according to figure 1,
- figure 3 is a schematic representation of a profile of discontinuity of an optical lens according to the invention.

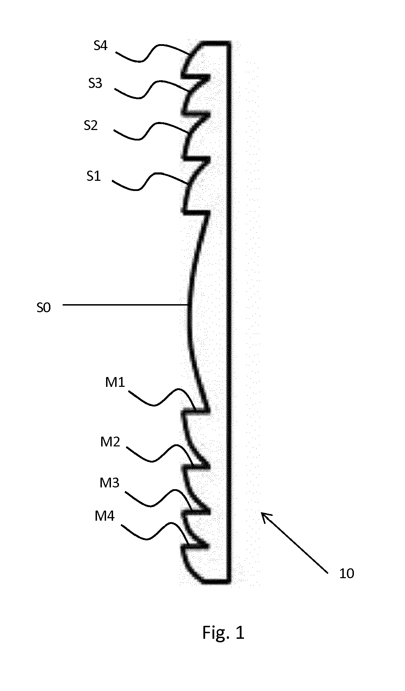

An example of optical lens according to the invention is represented on figure 1. The optical lens 10 comprises a discontinuous structure, for example a Fresnel structure. The discontinuous structure comprises a main continuous optically functional section S0 and n successive optically functional sections, with n being greater than or equal to 2. In the example of figure 1 n equals 4.

The functional section S0 is joined to the first optically functional section S1 by an annular step M1. Two successive optically functional section, for example S2 and S3 are joined by an annular step, for example M3.

Each annular step may be defined by its cross-section shape, angular orientation relative to the optically functional annular sections and position, i.e. an height and a width of the annular step. Parameters of the annular steps may be optimized so as to reduce parasite image formation using an optimization method, for example as disclosed in WO2014090833A1. Typically, parameters such as the shape, the orientation or the radial distance separating the exterior contour Cext,i and the interior contour Cint,i+1, may be considered upon the optimization so as to have the step as invisible as possible by someone observing the wearer.

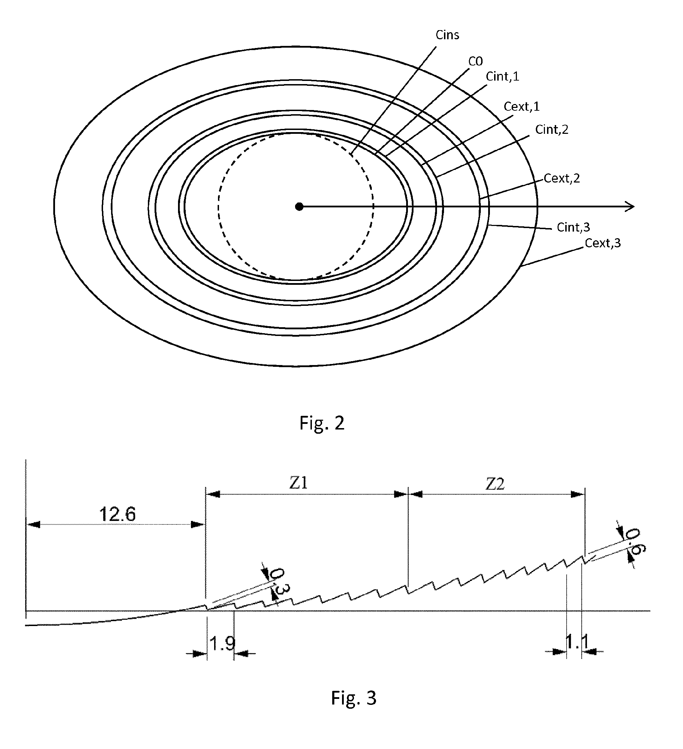

Figure 2 is a schematic representation of a front view an optical lens according to the invention. As represented on figure 2, the main continuous optically functional section is limited by an initial contour C0. The initial contour comprises an inscribed circle Cins.

In the sense of the invention, the inscribed circle is the largest circle contained in the initial contour C0 when the initial contour is plane or in the projection of the initial contour on the median plane of the initial contour when the initial contour is not plane; the inscribed circle touches, i.e. is tangent to, the initial contour C0 or its projection on the median plane.

In the following a contour implicitly means a closed contour.

Each optically functional section extends radially from the center of the inscribed circle and is limited by an interior contour Cint,i and an exterior contour Cext,i with the interior contour Cint,i fully comprised in the exterior contour Cext,i.

Furthermore, the optically functional sections succeed each other. In other words, the optically functional sections are arranged so that for any i comprised between 1 and n the projection of said exterior contour Cext,i of the ith optically functional section according to the projection direction onto the projection plane is fully comprised in the projection of said interior contour Cint,i+1 of the (i+1)th optically functional section according to the projection direction onto the projection plane.

As represented on figures 1 to 3, for each optically functional section the interior and exterior contours have a center of symmetry.

Typically, the projection of said interior and exterior contours according to the projection direction onto the projection plane are circles or ellipses. For elliptic projected interior and exterior contours, the major and minor axes are for example respectively aligned one with the other and for example are aligned with horizontal and vertical directions of the optical lens when worn by a wearer.

According to an embodiment of the invention, each optically functional section the projected interior and exterior contours have the same geometrical center.

Typically, all of the initial contour and the projected interior and exterior contours have the same geometrical center, for example the geometrical center of the inscribed circle.

Using a discontinuous surface on an optical lens impacts its optical and aesthetic performance. The inventors have found that for reducing these impacts it is advantageous to combine a minimum surface for the main continuous optically functional section, a maximum step height and a minimum section width.

According to the invention, the inscribed circle Cins of the initial contour C0 limiting the main continuous optically functional section has a radius greater than or equal to 10 mm, for example greater than or equal to 15 mm.

The inventors have selected a minimal radius of 10 mm for the inscribed circle of the initial contour to ensure that the main area of use of the lens provides good visual contrast to the wearer. That means ensuring that about 75 % of the main area of use (defined in regard with the gaze direction) is without discontinuity for standard wearing conditions of the lens.

Standard wearing conditions of the lens may be defined with the fitting cross intersecting the primary viewing direction, a distance between the center of rotation of the eye and the first major surface of the lens of 25.5 mm, a pantoscopic angle of 8° and a wrap angle of 0°.

The standard main area of use is ± 30°. With a 10 mm radius for the inscribed circle of the central area, the area of use without discontinuity is 20.85° for a standard wearing position of the lens.

Advantageously the radius of the inscribed circle may be personalized by taking into account measurement of wearer fitting parameters such as distance between the center of rotation of the eye and the first major surface of the lens, pantoscopic and wrap angle etc...

So as to increase the optical performance of the optical lens according to the invention, the main continuous optically functions section may comprise the fitting point of the optical lens.

Topically, the optical lens is configured so that when worn by a wearer under standard wearing conditions, the primary gaze direction passes through the main continuous optically functions section.

According to the invention, the width of each optically functional section is greater than or equal to 0.5 mm, for example greater than or equal to 1 mm.

In the sense of the invention, the width of each optically functional section Si is defined by the smallest distance between a point of the interior contour Cint,i and a point of the exterior Cext,i contour being greater than or equal to 0.5 mm.

As represented on figure 2, the width of each optically functional section may vary from one optically functional section to the other.

In a preferred embodiment, the width of optically functional sections decreases from the optically functional section joined to the main continuous optically functional section to the optically functional section the closest to the edge of the optical lens. This embodiment is not shown on figure 2.

According to the invention, the height of each step of the lens is smaller than or equal to 1 mm, for example smaller than or equal to 0.7 mm.

In the sense of the invention the height of each step of the lens is defined in the half-planes Pj comprising the line normal to the plane defined by the inscribed circle passing by the center of the inscribed circle, the half-planes Pj being bounded by said line. The height is the distance between an intersection point between the half-plane Pj and the exterior contour Cext,i of the ith optically functional section and an intersection point between the half-plane Pj and the interior contour Cint,i+1 of the (i+1)th optically functional section.

According to an embodiment of the invention, the height of each step of the lens is greater than or equal to 0.05 mm. That means that every distance measured in any half-plane Pj for every step of the lens is greater than or equal to 0.05 mm

According to the invention, the step heights may be identical or may vary.

Typically, the step heights may increase with their index i. The step having the smallest height is the step being the nearest from the optically functional section joined to the main continuous optically functional section. The step having the tallest height is the step being nearest from the optically functional section the closest to the edge of the optical lens.

The invention is not limited to lens showing such variations of step heights or variations of section widths. Embodiments of the invention gather lenses showing variations of step heights and variations of section widths.

In Figure 3 shows two zones of discontinuous sections. A first zone Z1 corresponding to 1<i<10 where the width of the "first" optically functional sections remains constant but the step heights increase with i. A second zone Z2 corresponding to 10<i<20, where step height remains constant but widths of the optically functional sections decrease with the i value. The value i = iₜᵣₐₙₛᵢₜᵢₒₙ corresponding to the transition between those two zones may be determined by various methods. Typically a chosen value of maximum step height may be determined, for example 1 mm. Starting from the first zone and with a given step height increasing evolution law, iₜᵣₐₙₛᵢₜᵢₒₙ corresponds to the index where the step height reaches the value of iₜᵣₐₙₛᵢₜᵢₒₙ.

This embodiment enables to meet the 3 criteria of the lens according to the invention.

The optical lens according to the invention may be a so-called semi-finished optical lens with the finished surface comprising the discontinuous structure and the other surface of the lens to be machined, for example according at least to the optical requirements of the wearer.

Typically when the optical lens is a semi-finished optical lens, the discontinuous structure is placed on the front surface of the optical lens.

The optical lens according to the invention may be an ophthalmic lens, for example an ophthalmic lens to be mounted in the spectacle frame or even an edged ophthalmic lens so as to be mounted in a spectacle frame.

When the optical lens is such an ophthalmic lens, complementary criteria may be considered, to ensure that the wearer of such an ophthalmic lens has a field of view suitable for his needs.

For example, the optical lens may be configured so that when wearing the ophthalmic lens, the center of the inscribed circle of the main continuous optically functional section intercepts the primary gaze direction for maximizing the wearer field of view without any contrast loss.

Another possibility may consist in arranging the discontinuous structure to position part of the initial contour as close as possible of a part of the spectacle frame border.

For example, the main continuous optically functional section is positioned according to the spectacle frame in order to limit the number of steps appearing in a part (nasal/temporal/up/down) of the spectacle lens. In this case, the fitting point/reference point may differ from the center of the initial contour.

Typically, the invention further relates to a method, for example implemented by computer means, for determining an optical lens according to the invention so as to fit a spectacle frame. The method comprises:
- a spectacle frame data providing step, during which spectacle frame data comprising the shape of the spectacle frame are provided,
- a wearer parameters providing step, during which wearer parameters relating to the optical requirements of the wearer are provided,
- a optical lens determining step, during which the optical lens is determined according to the wearer parameters and the discontinuous optically functional sections are determined so that once edged to be mounted in the spectacle frame, the optical lens does not comprise any discontinuous optically functional sections is the nasal part of the optical lens.

An advantageous embodiment of the invention corresponds to a situation where at least one optically functionally section has an interior contour Cint,i or an exterior contour Cext,i so as its projection on the projection plane according to the projection axis corresponds to an homothety of the frame contour projected on the same plane according to the same axis.

While in embodiment of the invention represented on figure 1, the discontinuous structure is on the front surface of the initial optical lens, it will be understood, that in alternative embodiments of the invention the discontinuous structure may be on the back surface of the optical lens.

Moreover, although the discontinuous structure is on a surface represented in Figure 1 as convex, it will be appreciated that this surface could equally well be concave or any other curved surface.

The discontinuous structure may also be only on a limited part of a surface of the optical lens. For example, the nasal part of the lens can be continuous (no discontinuity after edging to the frame shape) while the temporal part has discontinuities. Indeed, the thickness reduction of the lens is more useful on the temporal side of the lens (greater radius than on the nasal side especially for small half pupillary distance), especially for wrap lenses and myopic wearers.

This solution also leads to an extension of the field of view in the nasal part, which can be more comfortable for reading for example.

The invention has been described above with the aid of embodiments without limitation of the general inventive concept as defined in the claims.

Many modifications and variations will suggest themselves to those skilled in the art upon making reference to the foregoing illustrative embodiments, which are given by way of example only and which are not intended to limit the scope of the invention, that being determined solely by the appended claims.

In the claims, the word "comprising" does not exclude other elements or steps, and the indefinite article "a" or "an" does not exclude a plurality. The mere fact that different features are recited in mutually different dependent claims does not indicate that a combination of these features cannot be advantageously used. Any reference signs in the claims should not be construed as limiting the scope of the invention.

## Claims

1. An optical lens (10) having at least one of its optical surfaces comprising:
- a main continuous optically functional section (SO) limited by an initial contour (C0) with an inscribed circle Cins having a radius greater than or equal to 10 mm, a projection plane being defined as the plan containing the said inscribed circle Cins, a projection axis being defined as the direction normal to said projection plane,
- n successive optically functional sections (S1, ...Sn) with n greater than or equal to 2,
wherein
- the main continuous optically functional section S0 is joined to the first optically functional section by a step (M1),
- two successive optically functional sections are joined by a step (M1, ..., Mn),
- each optically functional section (S1, ..., Sn) extends radially from the center of the inscribed circle and is limited by an interior contour Cint,i and an exterior contour Cext,i, with the projection of said interior contour Cint,i according to the projection direction onto the projection plane being fully comprised in the projection of said exterior contour Cext,i according to the projection direction onto the projection plane; and the smallest distance between a point of the interior contour and a point of the exterior contour being greater than or equal to 0.5 mm, and
- the optically functional sections (S1, ...,Sn) are arranged so that for any i comprised between 1 and n the exterior contour Cext.i of the ith optically functional section is fully comprised in the interior contour Cint,i+1 of the (i+1)th optically functional section, and the half-planes Pj comprising the line normal to the plane defined by the inscribed circle passing by the center of the inscribed circle, the half-planes Pj being bounded by said line, the distance between an intersection point between the half-plane Pj and the exterior contour Cext,i of the ith optically functional section and an intersection point between the half-plane Pj and the interior contour Cint,i+1 of the (i+1)th optically functional section is smaller than or equal to 1 mm.

2. The optical lens according to claim 1, wherein the distance between an intersection point between the half-plane Pj and the exterior contour Cext,i of the ith optically functional section and an intersection point between the half-plane Pj and the interior contour Cint,i+1 of the (i+1)th optically functional section is greater than or equal to 0.05 mm.

3. The optical lens according to claim 1 or 2, wherein the distance between an intersection point between the half-plane Pj and the exterior contour Cext,i of the ith optically functional section and an intersection point between the half-plane Pj and the interior contour Cint,i+1 of the (i+1)th optically functional section is smaller than or equal to 0.7 mm.

4. The optical lens according to any of the preceding claims, wherein each optically functional section extends radially from the center of the inscribed circle so that the smallest distance between a point of its interior contour Cint,i and a point of the exterior contour Cext,i is greater than or equal to 1 mm.

5. The optical lens according to any of the preceding claims, wherein the distance between an intersection point between the half-plane Pj and the exterior contour Cext,i of the ith optically functional section and an intersection point between the half-plane Pj and the interior contour Cint,i+1 of the (i+1)th optically functional section varies from one optically functional section to the others.

6. The optical lens according to claim 5, wherein the distance between an intersection point between the half-plane Pj and the exterior contour Cext,i of the ith optically functional section and an intersection point between the half-plane Pj and the interior contour Cint,i+1 of the (i+1)th optically functional section increases from the optically functional section joined to the main continuous optically functional section to the optically functional section the closest to the edge of the optical lens.

7. The optical lens according to any of the preceding claims, wherein the smallest distance between a point of the interior contour Cint,i of the ith optically functional section and a point of the exterior contour Cext,i of the ith optically functional section varies from one optically functional section to the other.

8. The optical lens according to claim 7, wherein the smallest distance between a point of the interior contour Cint,i of the ith optically functional section and a point of the exterior contour Cext,i of the ith optically functional section decreases from the optically functional section joined to the main continuous optically functional section to the optically functional section the closest to the edge of the optical lens.

9. The optical lens according to any of the preceding claims, wherein the main continuous optically functions section comprises the fitting point of the optical lens.

10. The optical lens according to any of the preceding claims, wherein the optical lens is configured so that when worn by a wearer under standard wearing conditions, the primary gaze direction passes through the main continuous optically functions section.

11. The optical lens according to any of the preceding claims, wherein each optically functional section, comprises an interior or an exterior contour having a center of symmetry.

12. The optical lens according to the preceding claim, wherein for each optically functional section, the interior and exterior contours have substantially the same barycenter.

13. The optical lens according to any of the preceding claims, wherein the front optical surface comprises the at least two discontinuous optically functional sections and the back surface is to be machined according at least to the optical requirements of the wearer.

14. The optical lens according to any of claims 1 to 9, wherein the optical lens is an ophthalmic lens.

15. Method implemented by computer means for determining an optical lens according to any of the preceding claims to a spectacle frame, the method comprising:
- a spectacle frame data providing step, during which spectacle frame data comprising the shape of the spectacle frame are provided,
- a wearer parameters providing step, during which wearer parameters relating to the optical requirements of the wearer are provided,
- a optical lens determining step, during which the optical lens is determined according to the wearer parameters and the discontinuous optically functional sections are determined so that once edged to be mounted in the spectacle frame, the optical lens does not comprise any discontinuous optically functional sections is the nasal part of the optical lens.
